# EUROPEAN PATENT APPLICATION

(11) **EP 4 772 363 A1**
(43) Date of publication of application: **08.07.2026**
(21) Application number: 26150582.0
(22) Date of filing: 07.01.2026
(51) Int. Cl.: B60G 11/50, B60G 13/00, B60G 15/06, B60G 17/015

(54) **ROAD VEHICLE WITH AN ACTIVE SUSPENSION UNIT**

(30) Priority: 07.01.2025 IT 202500000069
(71) Applicant: FERRARI S.p.A., 41100 Modena (IT)
(72) Inventor: ZAMPIERI, Alberto, 41100 MODENA (IT); FERRIGNO, Rocco, 41100 MODENA (IT); ANNEQUIN-DIGOND, Thierry, 41100 MODENA (IT)
(74) Representative: Studio Torta S.p.A.

(57) **Abstract**

A road vehicle that develops along a longitudinal direction and with a roll axis X, a pitch axis Y and a yaw axis Z; wherein the vehicle comprises a frame and four wheels; for each wheel there is a suspension unit connecting the corresponding wheel to the frame; at least one of the suspension unit being an active suspension unit comprising: a rocker arm coupled to the frame in a rotary manner around a pivot with an axis A substantially parallel to the longitudinal direction of development of the vehicle; a suspension rod having a first end coupled to the rocker arm on the wheel side and a second end coupled to the wheel; a rod damper with a variable length along an axis A' having a first movable end coupled to the rocker arm on the frame side and a second fixed end coupled to the frame; an electric motor configured to generate a rotational torque that causes the rocker arm to rotate around the pivot; wherein the electric motor acts directly upon the rocker arm at the pivot.

## Description

### Cross-Reference To Related Applications

This patent application claims priority from Italian patent application no. 102025000000069 filed on January 7, 2025, the entire disclosure of which is incorporated herein by reference.

### Technical Field Of The Invention

The technical field of reference for the invention is that relating to road vehicles, in particular sports road vehicles. For the purposes of the invention, the road vehicle comprises, for each wheel, an active suspension unit with a rocker arm mounted on the frame in rotary manner around a pivot connected, on opposite sides, to a suspension rod of the wheel and to a rod damper. The active suspension assembly further comprises an electric motor configured to generate a rotational torque on the rocker arm and a spring device configured to generate a pullback torque on the rocker arm. In this technical field, the invention deals with the problem of how to offer an alternative arrangement of the aforementioned elements with respect to the prior art.

### State Of The Art

The invention relates to a road vehicle, in particular a sports road vehicle, with a roll axis, a pitch axis and a yaw axis. As it is known, the vehicle comprises a frame and four wheels. The wheels are in contact with the ground, while the frame represents the suspended portion of the vehicle. For each wheel, there is therefore a suspension unit, which connects the corresponding wheel to the frame. Currently, suspension units are known, which are called active and in which an electric motor is provided on the frame side and is controlled so as to cause the rotation of a rocker arm coupled to the corresponding wheel on the opposite side. In detail, the prior art closest to the invention entails a suspension unit associated with a wheel comprising:
- a rocker arm coupled to the frame in a rotary manner around a pivot with an axis preferably substantially parallel to the longitudinal direction of development of the vehicle;
- a suspension rod having a first end coupled to the rocker arm on the wheel side and a second end coupled to the wheel;
- a rod damper having a first end coupled to the rocker arm on the frame side and a second end coupled to the frame;
- an electric motor configured to generate a torque that causes the rocker arm to rotate around the pivot;
- a spring device configured to generate a pullback torque on the rocker arm.

According to this prior art, the motor acts upon the damper to control the movement of the rod along its axis on the side of the rocker arm, so that, by changing its length, the rod damper controls the rotation of the rocker arm around the pivot. Therefore, in this prior art, the electric motor is coupled to the frame end of the damper (towards the centre of the vehicle) and a gearbox is provided between the motor and the damper and is configured to convert the rotary motion of the motor into the axial motion of the damper rod. Furthermore, according to the prior art, the spring device is a helical spring coaxial to the rod damper. The active shock absorber is therefore stressed by the passive load of the spring, by the passive load of the shock absorber and by the active force of the damper: this combination causes a relevant overall operating load, thus leading to significant dimensions of the whole unit.

### Subject-matter And Summary Of The Invention

Starting from this prior art, the invention offers a vehicle as claimed in the appended claims, which entails a suspension unit that is less cumbersome along the pitch direction and ensures a better distribution of the loads on the components. This makes it possible to produce a more compact vehicle along the pitch direction or a vehicle with a larger useful transverse space and to provide lighter suspension components.

Based on the widest definition of the invention, there is provided a road vehicle with a roll axis X, a pitch axis Y and a yaw axis Z; wherein the vehicle comprises a frame and four wheels. According to the invention, for each wheel, there is a dedicated suspension unit, which connects the corresponding wheel to the frame. At least one of the suspension units is an active suspension unit comprising:
- a rocker arm coupled to the frame in a rotary manner around a pivot with an axis A substantially parallel to the longitudinal direction of development of the vehicle (which, when the vehicle is standing still, substantially coincides with the roll axis X);
- a suspension rod having a first end coupled to the rocker arm on the wheel side and a second end coupled to the wheel;
- a rod damper with an axis A' having a first movable end coupled to the rocker arm on the frame side and a second fixed end coupled to the frame in a position closer to the centre of the vehicle;
- an electric motor configured to generate a torque that causes the rocker arm to rotate around the pivot;
wherein, in a novel and inventive way, the electric motor acts directly upon the rocker arm at the pivot. Regarding the arrangement of the axis of the pivot, it is indicated to be substantially parallel to the longitudinal direction of development of the vehicle, without necessarily relating it to the roll axis X, since the roll axis X may also not be horizontal.

The term "acts directly" means that the rotary motion generated by the motor is not converted into linear motion, but acts directly through rotation upon the rocker arm at the pivot. In this way, two different components enjoy a better distribution of the loads. In fact, the motor no longer acts upon the rod damper, which can therefore be less heavy and, in addition, on the rocker arm the force of the damper and the force of the motor act at different points of the rocker arm. Furthermore, the transverse size is reduced by actually moving the motor from the inner end of the damper to the pivot of the rocker arm.

Preferably, the electric motor and the pivot are aligned on the same axis.

Preferably, the active suspension unit further comprises a spring device configured to generate a pullback torque directly on the rocker arm (in a manner similar to the motor).

Preferably, the spring device is a torsion bar acting directly upon the rocker arm at the pivot.

Preferably, the torsion bar and the pivot are aligned on the same axis.

Preferably, the torsion bar and electric motor are on opposite sides with respect to the pivot.

Preferably, between the electric motor and the pivot there is a gearbox.

Preferably, the second end of the suspension rod is located along the vertical direction parallel to the yaw axis Z at a lower height than the wheel centre, while the first end of the suspension rod is located along the vertical direction parallel to the yaw axis Z at a greater height than the wheel centre.

Preferably, the first and second ends of the suspension rod and the first and second ends of the rod damper are aligned in the plane defined by the pitch Y and yaw Z axes.

Preferably, the first end of the suspension rod and the first end of the rod damper are located along the vertical direction parallel to the yaw axis Z at a greater height than the pivot, while the second end of the suspension rod and the second end of the rod damper are located along the vertical direction parallel to the yaw axis Z at a lower height than the pivot.

### Brief Description Of The Drawings

The invention will be best understood upon perusal of the following detailed description of an embodiment, which is provided by way of example and is not limiting, with reference to the accompanying drawings, in which:
- figure 1 is a schematic view of a road vehicle;
- figure 2 is a schematic view of an active suspension representing the closest prior art of the invention;
- figures 3 and 4 are different views of an active suspension according to the invention.

### Preferred Embodiments Of The Invention

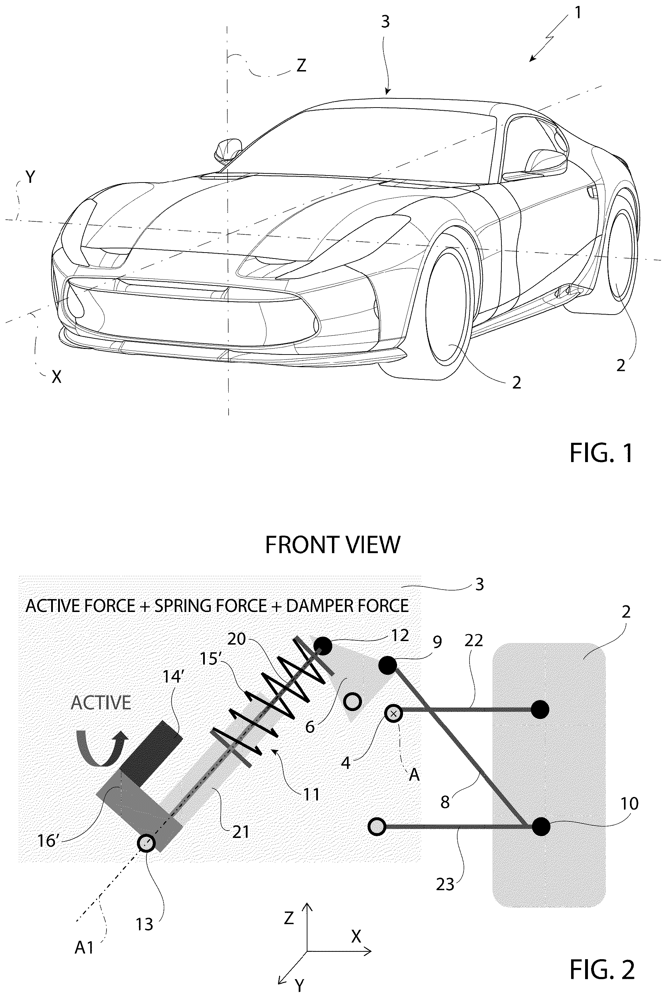

Figure 1 is a schematic view of a road vehicle. Figure 1 shows, as visible, a road vehicle 1 with a roll axis X, a pitch axis Y and a yaw axis Z. The vehicle comprises a frame 3 and four wheels 2. According to the invention, for each wheel 2, there is an independent suspension unit, which connects the corresponding wheel 2 to the frame 3.

Figure 2 is a schematic view of an active suspension representing the closest prior art of the invention. This figure shows an active suspension unit comprising:
- a rocker arm 6 coupled to the frame 3 in a rotary manner around a pivot 4 with an axis A substantially parallel to the direction of development of the vehicle (when the vehicle is standing still, the axis A is substantially parallel to the roll axis X);
- a suspension rod 8 having a first end 9 coupled to the rocker arm 6 on the wheel 2 side and a second end 10 coupled to the wheel 2;
- a rod damper 11 with a variable length along an axis A' having a first movable end 12 coupled to the rocker arm 6 on the frame side 3 and a second fixed end 13 coupled to the frame 3;
- an electric motor 14' configured to generate a rotational torque on the rocker arm 6 to cause it to rotate around the pivot 4.

As visible, according to the prior art of figure 2, the electric motor 14' is coupled to the fixed end 13 of the rod damper 11 and there is a gearbox/converter 16' configured to transform the rotation motion of the motor 14' into the translating motion of the rod 20 along the axis A1 with respect to the cylinder 21. Furthermore, there is a helical spring 15' coaxial to the rod damper 11. In this prior art, there are many elements (motor, gearbox) arranged towards the centre of the vehicle and the active forces, the spring force and the damping force all act upon the point of coupling 12 between the rod 20 and the rocker arm. References 22 and 23 identify other suspension arms not relevant for the purposes of the invention.

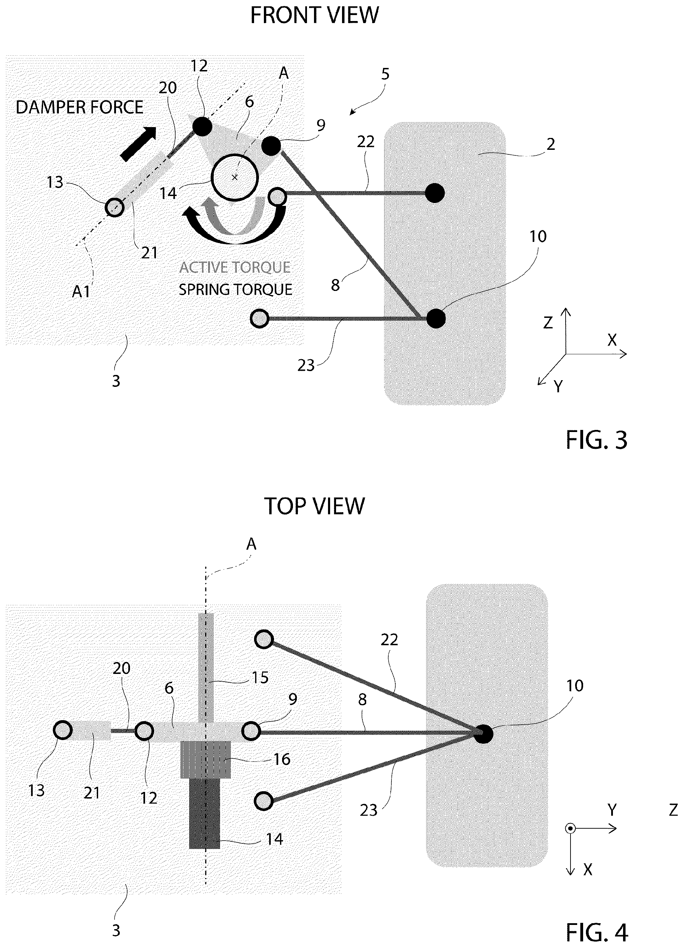

Figures 3 and 4 are different views of an active suspension according to the invention. In this example, according to the invention, the electric motor 14 no longer acts upon the rod 20, but controls the rotation of the rocker arm 6 by directly acting upon it at the pivot 4, wherein "directly" means that the rotational torque generated by the motor 14 is not converted into linear motion, but acts as torque upon the rocker arm. In this example, the electric motor 14 and the pivot 4 are aligned on the same axis A. In addition, the spring 15 has also been moved and is now a torsion bar acting directly upon the rocker arm 6 at the pivot 4. In this example, the torsion bar 15 and the pivot 4 are aligned on the same axis A and the torsion bar 15 and the electric motor 14 are on opposite sides with respect to the pivot 4. Many components that previously had transverse development now have development along the longitudinal direction of development of the vehicle. Between the electric motor 14 and the pivot 4 there is a gearbox 16, which, however, unlike the prior art, is a simple gearbox and does not convert the rotary motion of the motor into linear motion.

From a geometric point of view, in this example, the second end 10 of the suspension rod 8 is located along the vertical direction parallel to the yaw axis Z at a lower height than the wheel centre 4, while the first end 9 of the suspension rod 8 is located along the vertical direction parallel to the yaw axis Z at a greater height than the wheel centre 2. As visible, the first 9 and second ends 10 of the suspension rod 8 and the first 12 and second ends 13 of the rod damper 11 are aligned in the plane defined by the pitch Y and yaw Z axes. Finally, the first end 9 of the suspension rod 8 and the first end 12 of the rod damper 11 are located along the vertical direction parallel to the yaw axis Z at a greater height than the pivot 4, while the second end 10 of the suspension rod 8 and the second end 13 of the rod damper 11 are located along the vertical direction parallel to the yaw axis Z at a lower height than the pivot 4.

Finally, it is clear that the invention disclosed and shown herein can be subjected to changes and variations, without for this reason going beyond the scope of protection of the invention defined in the appended claims.

## Claims

1. Road vehicle (1) extending along a longitudinal direction with a roll axis (X), a pitch axis (Y) and a yaw axis (Z); wherein the vehicle comprises a chassis (3) and four wheels (2); for each wheel (2) being provided an independent suspension assembly (5) connecting the corresponding wheel (2) to the chassis (3); at least one of the suspension assemblies (5) being an active suspension assembly comprising:
- a rocker arm (6) rotatably coupled to the frame (3) around a pivot (4) with axis (A) substantially parallel to the longitudinal direction of the vehicle;
- a suspension rod (8) having a first end (9) coupled to the rocker arm (6) on the wheel (2) side and a second end (10) coupled to the wheel (2);
- a rod damper (11) with variable length along an axis (A') having a first movable end (12) coupled to the rocker arm (6) on the frame side (3) and a second fixed end (13) coupled to the frame (3);
- an electric motor (14) configured to generate a rotational torque on the rocker arm (6) to rotate it around the pivot (4);
**characterized in that** the electric motor (14) acts directly on the rocker arm (6) at pivot (4).

2. Vehicle according to claim 1, wherein the electric motor (14) and pivot (4) are aligned on the same axis (A).

3. Vehicle according to claim 1 or 2, wherein the active suspension assembly further comprises a spring device (15) configured to generate a torque, preferably a pullback torque, on the rocker arm (6).

4. Vehicle according to claim 3, wherein spring device (15) is a torsion bar acting directly on the rocker arm (6) at the pivot (4).

5. Vehicle according to claim 4, wherein the torsion bar (15) and pivot (4) are aligned on the same axis (A).

6. Vehicle according to claim 4, wherein the torsion bar (15) and electric motor (14) are on opposite sides from the pivot (4).

7. Vehicle according to any of the preceding claims, wherein between the electric motor (14) and the pivot (4) there is a gearbox (16).

8. Vehicle according to any of the preceding claims, wherein the second end (10) of the suspension rod (8) is located along the vertical direction parallel to the yaw axis (Z) at a lower elevation than the wheel center (4) while the first end (8) of the suspension rod (8) is located along the vertical direction parallel to the yaw axis (Z) at a higher elevation than the wheel center (2).

9. Vehicle according to any of the preceding claims, wherein the first (9) and second ends (10) of the suspension rod (8) and the first (12) and second ends (13) of the rod damper (11) are aligned in the plane defined by the pitch (Y) and yaw (Z) axes.

10. Vehicle according to any of the preceding claims, wherein the first (9) end the suspension rod (8) and the first (12) end of the rod damper (11) are located along the vertical direction parallel to the yaw axis (Z) at a higher elevation than the pivot (4) while the second (10) end of the suspension rod (8) and the second (13) end of the rod damper (11) are along the vertical direction parallel to the yaw axis (Z) at a lower elevation than the pivot (4).
